(19) **Europäisches Patentamt / European Patent Office / Office européen des brevets**

(11) **EP 1 987 639 B1**

(12) **EUROPEAN PATENT SPECIFICATION**

(45) Date of publication and mention
of the grant of the patent:
**16.12.2009 Bulletin 2009/51**

(51) Int Cl.:
***H04L 12/56*** (2006.01)

(21) Application number: **07717169.2**

(22) Date of filing: **01.02.2007**

(86) International application number:
**PCT/US2007/002812**

(87) International publication number:
**WO 2007/092269 (16.08.2007 Gazette 2007/33)**

(54) **METHODS, SYSTEMS AND APPARATUS FOR REDUCING REAL TIME DATA TRAFFIC IN A MULTI-LAYER NETWORK**

VERFAHREN, SYSTEME UND VORRICHTUNG ZUR REDUZIERUNG DES ECHTZEITDATENVERKEHRS IN EINEM MEHRSCHICHTIGEN NETZWERK

PROCÉDÉS, SYSTÈMES ET APPAREILS PERMETTANT DE RÉDUIRE LE TRAFIC DE DONNÉES EN TEMPS RÉEL DANS UN RÉSEAU MULTICOUCHE

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **08.02.2006 US 350629**

(43) Date of publication of application:
**05.11.2008 Bulletin 2008/45**

(73) Proprietor: **Cellnet Innovations, Inc.**
**Alpharetta,**
**Georgia 30022 (US)**

(72) Inventor: **SALT, Metin**
**11/2 Istanbul (TR)**

(74) Representative: **Thompson, Andrew John et al**
**Withers & Rogers LLP**
**Goldings House**
**2 Hays Lane**
**London**
**SE1 2HW (GB)**

(56) References cited:
**EP-A- 1 039 688**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention generally relates to systems and methods for utility meter data collection. More specifically, the invention relates to methods, systems, and apparatus for reducing real time data traffic in a multi-layer network.

BACKGROUND OF THE INVENTION

Basic commodities such as natural gas, electricity, and water are provided by commodity providers, such as utility companies, to households, businesses, and other consumers. Consumers can be charged based on the quantity of the commodity that the consumer uses or consumes. Consumer consumption can be gauged using meters, and the customers can be billed accordingly. Traditionally, at the end of a reporting period, each meter is physically inspected and a reading of each customer's meter readout dials is recorded, which reflects commodity usage. More recently, automatic meter reading systems can automatically capture commodity consumption data from the field. For example, a meter module can be fitted to an existing meter to provide remote data collection capability. A meter module can be any type of device, such as a transmitter, that transmits or otherwise communicates data from a meter to a remote or central location. Such modules can collect data and transmit it over wire and/or wireless communication methods so that the data can be received by a commodity provider, such as a utility company.

Meter modules can be incorporated into and can communicate with a network, such as a utility data collection network. A utility data collection network can transfer meter, usage and status information from utility electric, water and gas meter modules to a remote or centralized location, such as a control center, in which all meter, usage and status information is collected, processed, stored and delivered. In one example, a utility data collection network can be a multi-layer network. A multi-layer network can employ any combination of wireless and/or wired data communication technologies at different layers. A layer can be a series of one or more tasks, protocols, operations, or procedures to transmit or otherwise route data between two devices or locations.

In a conventional multi-layer network, each layer of the network can be characterized by its own data link quality, bandwidth, reliability, or other network or data transfer-related characteristics. A multi-layer network can include more than one network, in which case, each network can be described as a layer in the multi-layer network. Reliability of a layer or network can depend on a combination of one or more transmission techniques, error detection or correction methods, and network protocols used to overcome or otherwise compensate for relatively low data link quality in the associated layer or network. Data link quality can be measured by, for example, bit error rate (BER), packet success rate (PSR), signal strength (SS), and signal to noise ratio (SNR). The available bandwidth of a layer or network can depend on channel speed packet structure, and overhead used in an associated layer or network protocol. Bandwidth can be measured by, for example, the number of bits per second (bps), the number of symbols per second (baud), etc.

Differences in data transfer-related characteristics between each layer or network in a multi-layer network can result. In some instances, a bridge device or software can make changes to either or both data packaging (protocol) or physical data representation to ensure relatively high data transfer reliability when transmitting data between one layer and another layer, or from one network to another network, in a multi-layer network. For example, data packaging in one network or layer can be achieved using UDP/IP protocol, where the network or layer may be relatively reliable but have a relatively lower bandwidth; whereas data packaging in another network or layer can be achieved using TCP/IP protocol, where the particular network or layer may be relatively less reliable but have a relatively higher bandwidth. In another example, different physical data representation may exist when data is transmitted via wireless radios in one layer of a multi-layer network; whereas data may be transmitted via a fiber optic cable link in another layer of the multi-layer network. In this example, each of the layers in the multi-layer network can have different reliability characteristics and bandwidths.

In one example, such as a conventional utility data collection network, a first layer can exist between a meter module and an intermediate device, such as a bridge. The first layer can extend to the links between other meter modules and other bridges. An intermediate device can also be, but is not limited to, a repeater, concentrator, router, or other type of data transmission bridge. A second layer can exist between, the bridge and the takeout router. In the example shown, the reliability of data transfer of the layer between the meter module shown and the bridge is relatively low compared to the reliability of data transfer of the layer between the bridge and the takeout router. In some instances, the lack of line-of sight between a meter module and an associated bridge can decrease data link quality during data transmission, thus reducing the reliability of the layer or network. Furthermore, due to the collective links between the meter modules and bridges, the bandwidth of the layer between the meter module and the bridge can be relatively high compared to bandwidth of the layer between the bridge and the takeout router. In some instances, transmission of a single data packet between the meter module and the bridge is sufficient to ensure data transfer. Since the layer and network characteristics differ in at least these respects, it may not be practical or necessary in many instances, to forward or otherwise transmit all data packets and repetitions of the data packets from all of the meter modules to a takeout router. In this example, the combination of higher reliability but low bandwidth can inhibit the bridge from simply routing all data it receives to one or more peer devices, such as the takeout bridge, at a subsequent layer.

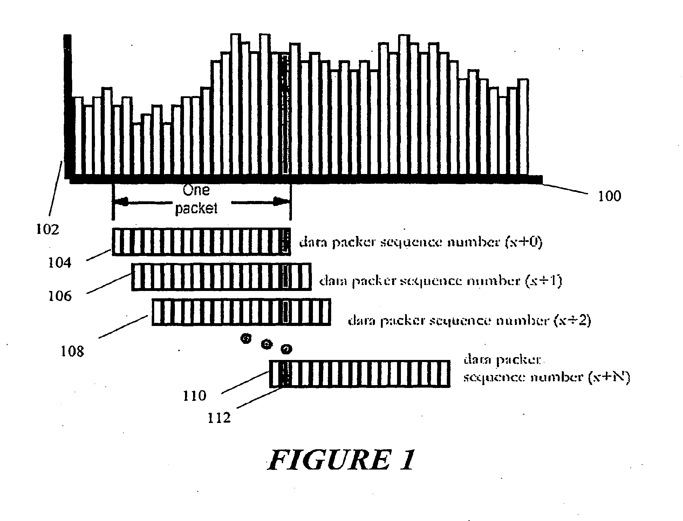

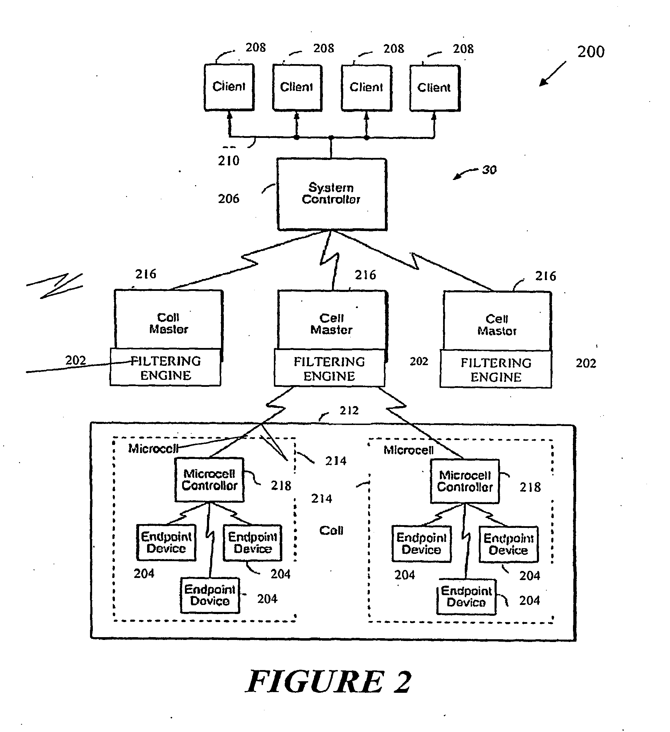

One conventional method to compensate for the relatively low reliability of the layer between the meter module and the bridge can employ a method of redundant repetition of data. This redundancy can increase the chance that usage or status information from a specific meter will be transferred from an associated meter module to the next layer device in the utility data collection network described above. FIG. 1 illustrates an example of a data packet and a process using redundant repetition of data. The horizontal axis 100 in FIG. 1 can represent data, such as energy usage, and the vertical axis 102 can represent time, such as minutes. In an alternative graphical representation, the horizontal axis can represent time, such as minutes, and the vertical axis can represent data, such as energy usage. In either instance, a series of data can be formed into one or more data packets for transmission via a network, such as a utility data collection network shown in FIG. 2. As shown in FIG. 1, a first data packet 104 can be designated "data packet sequence number (x+0)", a second data packet 106 can be designated "data packet sequence number (x+1)", a third data packet 108 can be designated "data packet sequence number (x+2)", and each Nth data packet 110 can be designated "data packet sequence number (x+N)". In one or more of the data packets, such as 104, 106, 108, 110, the process can repeat at least one of the instances of data, such as 112. In the example shown, a preset number of time sequential instances of data, such as 18 total, can be transmitted in each data packet. With the formation and transmission of each sequential data packet, the oldest instance of data is dropped and the newest instance of data is added to each new data packet. Thus, in the example shown in FIG. 1, a particular instance of data 112 is repeatedly sent in a sequential series of data packets 104, 106, 108, 110 until the instance of data 112 is excluded as the oldest instance of data in a sequentially formed new data packet. In this manner, the instance of data 112 is repeatedly transmitted in redundant fashion, increasing the chances that associated data, such as usage or status information from a specific meter, will be transferred from an associated meter module to the next layer device in the utility data collection network describe above.

Conventional devices and methods for monitoring utility data can generate and transmit redundant data packets across a network, for example, even if there is no consumption activity. This can have consequences for battery-operated devices since batteries provide a limited power supply, and must be replaced periodically. Furthermore, transmission of redundant data packets across one or more layers of a network can create RF traffic with a potential for collisions and loss of data or reduction of performance, increase the amount of data transmitted across the network, and require a significant amount of processing power and memory space for data storage, post-processing and archiving.

One conventional method to compensate for the repetitive data redundancy can employ one or more consolidation methods. One such consolidation method utilizes an algorithm to store some or all incoming data packets from one or more meter modules. Some or all data from each meter module can be stored in a data storage device associated with a layer, such as a concentrator. An associated table can be created and maintained to correlate the data storage device location, such as in the data storage device of a concentrator, of data for each of the meter modules. However, this method can require a relatively large data storage capacity in the concentrator. Large data storage capacity can be expensive and time consuming to maintain. In some instances, necessary data storage capacity can be reduced by limiting the number of meter modules that the device, such as the concentrator, serves.

In at least one example, a concentrator can incorporate an algorithm to determine one or more meter modules from which to allocate data storage capacity and to store incoming data packets. In some instances, the algorithm can obtain a measure of data transfer reliability, such as the RF signal quality between the meter module and the concentrator. However, the concentrator may be required to allocate storage space for a relatively low signal quality meter module compared to a relatively high signal quality meter module since the relatively low signal quality meter module may have no other data transfer link to the concentrator. Alternatively, decision making can be utilized to determine which particular meter module is allocated storage space in a particular concentrator to account for all the meter modules and concentrator devices in an overall network. Although this alternative approach can provide improved coverage of meter modules in a network and can reduce some data traffic for the next network layer, this approach can introduce complex and time consuming management and control of each concentrator and its relation to each meter module. This approach can result in increased data traffic for each concentrator.

Another conventional system utilizes the sequence number in each data packet regardless of which meter module it is originates from and applies modulo "n" arithmetic. If the result of modulo "n" arithmetic is zero, then the system forwards the data packet. In all other instances, the data packet is not forwarded and the data packet is dropped by the system without any further processing to the data packet. This algorithm can be relatively effective for meter modules with a relatively high RF link quality to the device since there are statistically more data packets and more repetitive data packets. However, the effectiveness of this type of conventional system can be significantly degraded for meter modules with a relatively low RF link quality since these modules may utilize only a single data packet out of a group of data packets when there are multiple repetitive data packets.

Therefore, a need exists for methods, systems, and apparatus for reducing real time data traffic in a multi-layer network. A further need exists for methods, systems, and apparatus for reducing data traffic in a network comprising a first network layer and a second network layer. An additional need exists for methods, systems, and apparatus for decreasing data transfer traffic communicated in a network, wherein the network comprises at least two layers. A need also exists for methods, systems, and apparatus for filtering data packets stored in a data storage device to facilitate a reduction in data traffic for a network associated with the data storage device.

EP1039688 A2 discloses a system for collecting and aggregating data from network entities for a data consuming application. The system includes a data collector layer to receive network flow information from the network entities and to produce records based on the information. The system also includes a flow aggregation layer fed from the data collection layer and coupled to a storage device. The flow aggregation layer receives records produced by the data collector layer and aggregates received records.

SUMMARY OF THE INVENTION

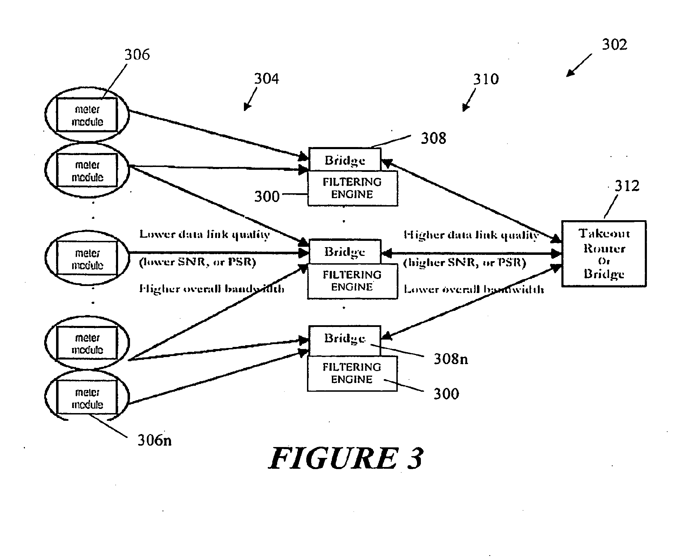

Embodiments of the present invention addresses some or all of the needs described above. Furthermore, embodiments of the present invention can provide methods, systems, and apparatus to reduce data packet traffic from one layer to another layer in a multi-layer network. In addition, embodiments of the present invention can increase reliability of the data packet traffic resulting in a reduced amount of redundancy in the data transmission. Embodiments of the present invention can also address a problem of keeping a similar reliability figure for data transfers where the collective bandwidth, as well as data link quality, are different from one layer of a network to another one, as it is illustrated in FIGs. 2 and 3. Embodiment of the present invention can comprise various systems and methods for utility meter data collection on distributed metering systems, such as that shown in U.S. Pat. No. 6,628,699.

Another aspect of the present invention is a method for decreasing data transfer traffic communicated in a data collection network, wherein the network comprises at least two network layers, the method comprising: receiving a plurality of data packets from a first network layer; selecting a threshold capable of filtering redundant data packets received from the first network layer based at least on a signal characteristic associated with at least one of the plurality of data packets; receiving a new data packet from the first network layer, wherein the new data packet comprises at least one signal characteristic; and determining whether to transmit the new data packet from the first network layer to a second network layer by determining whether a signal characteristic associated with a new data packet meets or exceeds the threshold, wherein if the signal characteristic associated with the new data packet meets or exceeds the threshold, then determining that the new data packet is not similar to at least one of the plurality of data packets.

Yet another aspect of the present invention is a data collection system with at least two network layers, the system comprising: a plurality of modules capable of transmitting data from a first network layer; a filtering engine capable of: processing a plurality of data packets received from the first network layer; applying a threshold capable of filtering redundant data packets received from the first network layer based at least on a signal characteristic associated with at least one of the plurality of data; processing a new data packet received from the first network layer, wherein the new data packet comprises at least one signal characteristic; and determining whether to transmit the new data packet from the first network layer to a second network layer, by determining whether a signal characteristic associated with a new data packet meets or exceeds the threshold, wherein if the signal characteristic associated with the new data packet meets or exceeds the threshold, then determining that the new data packet is not similar to at least one of the plurality of data packets.

Objects, features and advantages of various systems, methods, and apparatuses according to various embodiments of the invention can include:

    (1) reducing real time data traffic in a multi-layer network;

    (2) reducing data traffic in a network comprising a first network layer and a second network layer;

    (3) decreasing data transfer traffic communicated in a network, wherein the network comprises at least two layers; and

    (4) filtering data packets stored in a data storage device to facilitate a reduction in data traffic for a network associated with the data storage device.

Other objects, features and advantages of various aspects and embodiments of systems, methods, and apparatuses according to the invention are apparent from the following detailed description of the disclosed embodiments and the appended drawings and claims.

BRIEF DESCRIPTION OF THE DRAWINGS

FIG. 1 illustrates an example of a prior art packet of data which can be used with embodiments of the present invention.

FIG. 2 illustrates a utility data collection system or multi-layer network in which the present invention may be utilized.

FIG. 3 illustrates a portion of a network and a filtering engine in accordance with an embodiment of the present invention.

FIG. 4 illustrates an example of a filtering engine in accordance with an embodiment of the present invention.

FIGs. 5A and 5B illustrate an example of operation of an exemplary queue according to one embodiment of the present invention.

FIGs. 6 and 7 illustrate example methods which can be implemented by a filtering engine in accordance with an embodiment of the present invention.

DETAILED DESCRIPTION OF SPECIFIC EMBODIMENTS

Embodiments of the present invention can reduce data traffic in a multi-layer network. One aspect of the invention can identify and filter redundant data before such data is transmitted to a subsequent layer or network. For example, a filtering algorithm implemented by a data filter can identify and filter redundant data in a data queue or other device connecting two layers of a network. This can result in less data traffic between layers, and reliability in data transmission between the layers can be improved. Embodiments of the present invention can provide an effective method to eliminate or reduce redundancy among data packets where the complexity and resources (memory, computation speed, etc.) of a bridge is limited. Other embodiments can be used with a queue, a similar device, or a log queue implementation routine which can represent some or all data packets routed to a particular takeout point over a predefined period of time.

An example of an exemplary environment for an embodiment of the invention is a utility data collection network. An example of a utility data collection network is shown as 200 in FIG. 2. It is specifically contemplated that the present invention can be used in a more complex utility meter reading or utility data collection system, such as those described in U.S. Pat. Nos. 6,628,699; 6,617,978; 6,424,270; and 6,195,018, the disclosures of which are all incorporated herein by reference. The present invention can also be used in a portion of a wireless network, such as the network 300 in FIG. 3.

Referring to FIG. 2, an example of a utility data collection network 200 with a filtering engine 202 is illustrated in accordance with one embodiment of the present invention. Various transmission and communication technologies can be utilized in conjunction with the utility data collection network 200 and filtering engine 202. For example, spread spectrum technology can be a suitable data transmission protocol for use with the utility data collection network 200 and filtering engine 202 shown. In one embodiment, one or more devices, for example radios, can transmit one or more streams of information within a relatively small geographic area. The utility data collection network 200 and filtering engine 202 can be used in remote monitoring applications, for example by utility companies, to remotely monitor resource consumption. In addition, embodiments of the invention that relate to transmission of data are not limited to any particular type or method of transmission. Specifically, those embodiments are not limited to wireless or radio frequency (RF) transmission. In other embodiments of the invention, a filtering engine, such as 202, or various associated functionality, can be implemented in or with other system components, such as a microcell controller shown below as 218.

The network 200 can include one or more endpoint devices or meter modules 204. A endpoint device or meter module can include a meter, or any device that can record resource consumption at a utility meter, for example an electricity meter, located at a business or residential structure. The meter modules 204 can collect information and, using internal wireless radio transceivers (not shown), periodically transmit or otherwise communicate the information as digital data packets through a hierarchical network to a system controller 206. A data packet can be any data structure capable of being transmitted via a network. For example, a suitable data packet can include meter identification data, also known as an identifier, and data about the amount of utility consumed during a set period of time. In another example, a suitable data packet can include data about the time elapsed while the most recent quantity of commodity was consumed and information about recent historical consumption during prior quantity intervals. In either example, a data packet can include data about the current or most recent time increment as well as data about a set number of prior time periods. By way of further example, a data packet can include recent use data and historical use data for the n - 1 previous time intervals. One suitable data packet is shown and described in U.S. Patent No. 6,628,699, previously incorporated herein by reference. Data can be collected from a meter by an interface or meter-reading device, such as a disc reader. A disc-reader records information from a meter's spinning disc. The disc can be fitted with a mark and an optical system on the interface is used to read the mark to count the number of disc revolutions. This information can be stored in some type of accumulator. Alternatively, the meter data may be collected via more intelligent means that communicate with the meter to request and receive information. These and other types of meter-reading devices are well known in the art.

Meter modules 204 can also include an interface that records and transmits data related to the consumer's consumption of the commodity. For example, one utility meter may measure electricity usage at a household. In some systems, the meter can have a component or module that, at set time intervals, records the measured electricity usage and sends the data to a concentrator. At least one embodiment of the invention can read, record and/or transmit usage data based on quantity intervals rather than the expiration of a set interval of time. In other words, the occurrence of the read, record, and/or transmit functions is based on determinations that a set quantity of the commodity has been consumed rather than a determination that a set period of time has expired.

A system controller 206 can include a network server computer (not shown) that can distribute the information to one or more clients 208 on a computer network 210. Data collected from utility meters can be eventually stored and used by clients 208 via the system controller 206. The system controller 206 can use the usage data to generate statistics and consumer bills. The accuracy of the statistics and billing statements generated generally depends upon the level of detail provided by the transmitted usage data. It should be noted that although the examples used in the specification involve transmission of data based on a quantity interval or count step interval, the present invention is not limited to meter reading devices and systems that transmit data on this basis.

In larger metropolitan or geographic areas, endpoint devices or meter modules 202 in the wireless network 200 can be organized into "cells" 212, which can be divided into "microcells" 214. In one embodiment, a microcell 214 can cover a relatively small geographic area of predefined size or containing a predefined number of endpoint devices or meter modules 204. Each cell 212 can be governed or otherwise controlled by a cell master 216 or takeout point, which oversees operation of some or all of the endpoint devices or meter modules 204 within the cell 212 and can relay information between the system controller 206 and the endpoint devices or meter modules 204 in the respective cell 212.

Each microcell 214 can be governed or otherwise controlled by a microcell controller 218 or bridge, which can supervise the operation of some or all of the endpoint devices or meter modules 204 in the microcell 214 and which can relay information between the corresponding cell master 216 and the endpoint devices or meter modules 204 in the respective microcell 214.

A microcell controller 218, bridge, controller, concentrator, or similar type device can collect usage data from one or more meter modules 204, which can be located geographically close to the microcell controller 218, bridge, controller, concentrator, or similar type device. The data can be transmitted from a particular meter module 204 in a variety of ways including by wireless or wire-based communication techniques, or can be collected manually by field personnel. For example, the data can be transmitted by power line carrier signal, by RF signal, by modem, over telephone lines, over wide area network lines, over local area network lines, over Wi-Fi wireless local area networks, or over wireless wide area networks (WWANs). The present invention is not limited to any particular communication method or type of data communication. In at least one embodiment, a filtering engine, such as 202, or associated functionality can be implemented in or with a microcell controller, such as 218.

A cell master 216 or takeout point can collect data from one or more microcell controllers 218, bridges, controllers, concentrators, or similar type devices. This data can then be passed on to a system controller 206 where it can be stored and used for billing and statistical purposes, and further distributed to or processed, as needed for example, by one or more clients 208.

In one embodiment, the utility data collection network 200 can limit or otherwise control the number of microcell controllers 218, bridges, controllers, concentrators, or similar type devices in the network 200 since each controller 218 can add to the total cost of installing and administering the network 200. The number of microcell controllers 218, bridges, controllers, concentrators, or similar type devices used in the network 200 for a given geographical area can depend on the minimum signal strength ("sensitivity") at which each controller 218 can recover information contained in some or all of the transmissions from the endpoint devices or meter modules 204 in the corresponding microcell 214. The cost of the utility data collection network 200 can be further reduced and its dynamic capabilities can be expanded if the wireless transmitters used in the communicating devices (e.g., system controller 206, cell masters 216 or takeout points, microcell controllers 218 or bridges, and endpoint devices or meter modules 204) in the network 200 include relatively efficient components.

In one embodiment, the utility data collection network shown in FIG. 2 can be used with a direct sequence spread spectrum (DSSS) data transmission protocol in which cyclic code shift keying (CCSK) can be used to modulate digital data onto digital pseudo-noise (PN) spreading sequences. CCSK is a modulation technique in which circular phase shifts of a PN sequence can be used to represent the possible constellation (or data) symbols. For example, a 63-chip PN sequence can support up to 63 different data symbols, each of which would be 63-chips in length. An M-CCSK constellation (or alphabet) is a group of M CCSK data symbols, each representing a unique combination of binary data bits, where M is an integer greater than one. Spread spectrum communication systems using CCSK and related data modulation techniques are described in U.S. Patent Nos. 4,707,839; 4,730,340; and 6,628,699, the contents of which are hereby incorporated by reference. The present invention is not limited to use with a DSSS system using CCSK data modulation.

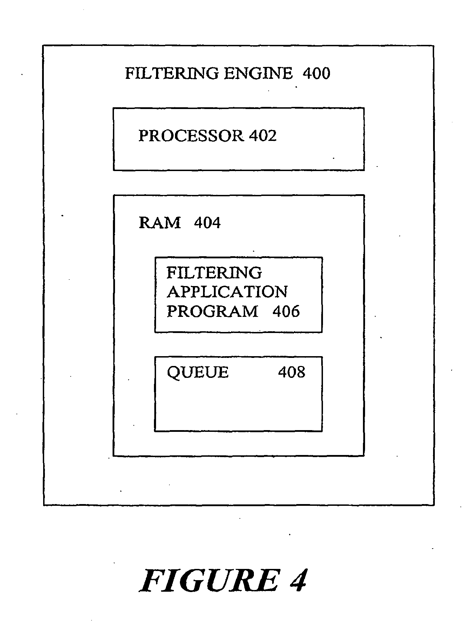

The filtering engine 202 shown in FIG. 2 can be adapted to operate in conjunction with various data transmission protocols implemented by or within the network 200. In the embodiment shown, the filtering engine 202 can be implemented with the operation of one or more microcell controllers 218, bridges, controllers, concentrators, or similar type devices. In other embodiments, a filtering engine 202 can be implemented with the operation of one or more cell masters 216 or takeout bridges, system controllers 206, bridges, concentrators, or other types of routers, takeouts, or other controller devices and/or routines. An example of a filtering engine is shown and described in greater detail with respect to FIG. 4.

Embodiments of the invention can also operate in conjunction with methods to compensate for the relatively low reliability of the layer between the meter module and the bridge, such as a method of redundant repetition of data as described above. This redundancy can increase the chance that usage or status information from a specific meter can be transferred from an associated meter module to the next layer device in the utility data collection network, such as the network 200 shown in FIG. 2.

A filtering engine, such as 300 in FIG. 3, can also operate in conjunction with other embodiments of a network, such as a multi-layer data network 302. In FIG. 3, a first layer 304 or lower data link network can exist between a meter module 306 and an intermediate device, such as a bridge 308. A filtering engine 300 can operate in conjunction with the bridge 308. The first layer 304 can extend to the links between other meter modules 306n and other bridges 308n. An intermediate device can also be, but is not limited to, a repeater, concentrator, router, or other type of data transmission bridge. A second layer 310 or upper data link network can exist between a bridge 308 and a takeout router 312.

The filtering engine 300 shown can communicate with various network components using one or more broadcast protocols. In the embodiment shown, the lower data link network or first layer 304 is a wireless network that can allow data packets to be transmitted to the bridge 308 and the filtering engine 300 via a broadcast protocol. Likewise, the upper data link network or second layer 310 is a wireless network that can allow data packets to be transmitted from the bridge 308 and the filtering engine 300 to the takeout router 312 via another broadcast protocol.

In the example shown in FIG. 3, the reliability of data transfer of the layer 304 between the meter module 306 shown and the bridge 308 can be relatively low compared to the reliability of data transfer of the layer 310 between the bridge 308 and the takeout router 312. In some instances, the lack of line-of sight between a particular meter module 306 and an associated bridge 308 can decrease data link quality during data transmission, thus reducing the reliability of the layer 304 or network. Furthermore, due to the collective links between the meter modules 306, 306n and respective bridges 308, 308n, the bandwidth of the layer 304 between the meter module 306 and the bridge 308 can be relatively high compared to bandwidth of the layer 310 between the bridge 308 and the takeout router 312. In some instances, transmission of a single data packet between the meter module 306 and the bridge 308 is sufficient to ensure data transfer. Since the characteristics of the layers 304, 310 or networks differ in at least these respects, it may not be practical or necessary in many instances, to forward or otherwise transmit all data packets and repetitions of the data packets from all of the meter modules 306, 306n to a takeout router 312. In this example, the combination of higher reliability but low bandwidth can inhibit the bridge 308 from simply routing all data it receives to one or more peer devices, such as the takeout router 312, at a subsequent layer. For networks with characteristics similar to FIG. 3, a filtering engine 300 can reduce data packet traffic across the layers 304, 310 or collective network shown.

Embodiments of a filtering engine can communicate with one or more of the meter modules to receive at least one data packet. For example, the filtering engine 300 shown can receive a data packet from a particular meter module, such as 306. Some or all of each data packet can be stored in a queue, or other data storage device, associated with a respective bridge, cell master, or other routing device. For example, a suitable portion of a data packet can be a data packet identifier, for example a data packet sequence number such as 104 in FIG. 1, and a suitable bridge can be 308 in FIG. 3. In one embodiment, a suitable queue can be a log queue capable of receiving and storing a portion of a data packet. The filtering engine can then search and identify data in each of the data packets stored in the queue or data storage device. For example, the filtering engine can search and identify a data packet in a queue, such as 408 in FIG. 4. In one embodiment, the filtering engine can search for and identify a particular meter module identifier and data packet identifier associated with a particular data packet stored in a queue or data storage device.

When the filtering engine 300 shown processes one or more data packets in this manner, this type of activity can be described as "real time processing" of data packets. Real time processing can occur since transmission of a received data packet occurs immediately after a decision is made to forward the received data packet to a downstream point, such as a system controller, takeout router, or other routing device. Only a portion of the data packet, rather than the entire data packet, is processed in the queue or data storage device associated with the bridge or cell master. The stored information can be used by the filtering engine 300 to make a real time decision on forwarding a particular data packet from the bridge or cell master. When necessary, the data packet can be transmitted by the filtering engine 300 from the bridge or cell master to the next network layer.

FIG. 4 illustrates an example of a filtering engine 400 in accordance with an embodiment of the invention. The filtering engine 400 can operate in conjunction with a cell master or takeout point, a microcell controller or bridge, a controller, concentrator, or similar type device used in a network 200. As shown in FIG. 2, a filtering engine 202 can operate in conjunction with a cell master 216 or takeout point. A filtering engine, such as 400, can be a separate or integrated component. In the embodiment shown in FIG. 3, the filtering engine 300 is associated with a bridge 308. One or more embodiments of a filtering engine in accordance with the invention can operate in a network, such as the utility data collection network 200 in FIG. 2 or network 302 in FIG. 3.

The filtering engine 400, shown in FIG. 4, can comprise a computer-readable medium. The computer-readable medium can comprise a processor 402 coupled with a random access memory (RAM) 404. The processor 402 can execute computer-executable program instructions, such as a filtering application program 406 stored in a data storage device, such as memory or RAM 404. Such processors can comprise a microprocessor, an Application-Specific Integrated Circuit (ASIC), a state machine, or other processor. Such processors comprise, or may be in communication with, media, for example computer-readable media, which stores instructions that, when executed by the processor, cause the processor to perform the steps described herein.

Embodiments of computer-readable media may comprise an electronic, optical, magnetic, or other storage or transmission device capable of providing a processor, such as 402 or an associated processor of a client shown as 208 in FIG. 2, with computer-readable or computer-executable program instructions. Other examples of suitable media may comprise a floppy disk, Compact Disk Read Only Memory (CD-ROM), magnetic disk, memory chip, Read Only Memory (ROM), Random Access Memory (RAM), an ASIC, a configured processor, all optical media, all magnetic tape or other magnetic media, or any other suitable medium from which a computer processor can read instructions or on which instructions, code, or other data may be stored. Also, various other forms of computer-readable media may transmit or carry instructions to a computer, including a router, private or public network, or other transmission device or channel, both wired and wireless. The instructions may comprise code from any suitable computer-programming language, including, for example, C, C++, C#, Visual Basic, Java, Python, Perl, and JavaScript.

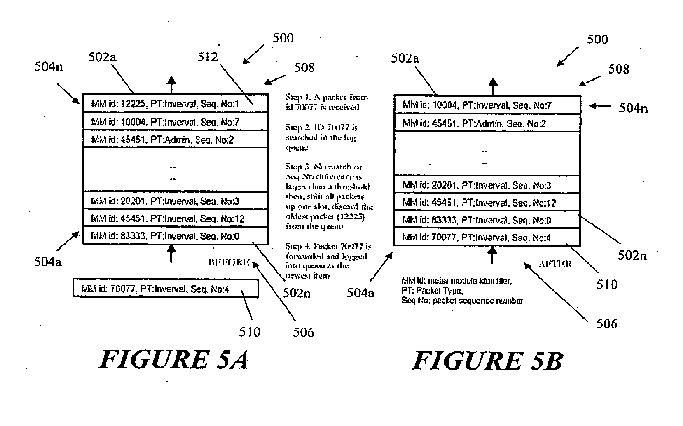

Memory or RAM 404 can include a queue 408 or other data storage device. For example, a suitable queue can be a circular-type, first-in, first-out (FIFO) queue. An example of a circular-type, FIFO queue is illustrated in FIGs. 5A and 5B and described in greater detail below. A queue 408 can be automatically or manually configured based on the desired level of redundancy, if any, in data traffic associated with a particular meter module, layer, or network, such as meter module 306, layers 304, 310, or network 302 in FIG. 3. For example, the depth or volume of each queue can be automatically adjusted based on a desired level of redundancy in data traffic associated with the network 302. In at least one embodiment, the lack of a line of sight between a meter module and an associated bridge, for example meter module 306 and bridge 308, can decrease data link quality during transmission of one or more data packets from the meter module to the bridge, thus reducing the overall reliability of the lower data link network, such as 304. In this embodiment, a broadcast protocol using a redundant data transmission technique, such as transmitting one or more repetitive data packets, can be utilized to communicate data within the network 302 to overcome or otherwise compensate for the relatively lower data link quality between the meter module 304 and bridge 308. A queue can be, but is not limited to, a memory, RAM, a meter, a meter module, a router, a bridge, a takeout device, or any other data storage device, structure, or memory location in a data storage device.

In at least one embodiment, a queue can be a data storage device associated with a meter module. Embodiments of a filtering engine can operate in conjunction with one or more queues associated with respective meter modules. Some or all of the data packets received or otherwise generated by a meter module can be stored by the queues associated with the meter modules. A filtering engine, in this example, can process the portions of the data packets in the queues associated with the meter modules, and perform some or all of the methods described herein.

FIGs. 5A and 5B illustrate an operation associated with a queue in accordance with an embodiment of the invention. In the examples shown in FIGs. 5A and 5B, a queue 500 can be a circular-type, first-in first-out (FIFO)-type queue. FIG. 5A illustrates an initial state of a queue 500 including one or more data entries 502a-n associated with respective data packets (not shown). Suitable data packets can be similar to the data packet shown as 112 in FIG. 1. The data entries 502a-n for the respective data packets can be organized in respective locations 504a-n within the queue 500 depending on a characteristic of the respective data packet, such as the recency of the data packet. By way of the pictoral example in FIGs. 5A and 5B, data entries located near the lower portion 506 of the queue 500 are generally more recent than the data entries located near the upper portion 508 of the queue 500. As shown in FIGs. 5A and 5B, as a recent data entry 510 is added to the queue 500, the oldest data entry 512 can be discarded, omitted, or deleted from the queue 500, and some or all of the previously stored data entries advance one location upward within the queue 500. The pictoral representation in FIGs. 5A and 5B is by way of example only, and other embodiments of a queue and processing data in queue can be implemented in accordance with the invention. For example, in at least one embodiment, data in the queue can be managed by one or more read and write pointers that mimic the shifting of one or more data entries from one memory location to another within the queue 500, such as when a new data packet is added to the queue. In this manner, the shifting computation and operation as shown in FIGs. 5A and 5B can be emulated or mimicked.

Referring back to the filtering engine 400 shown in FIG. 4, embodiments of the filtering engine in accordance with the invention can implement an algorithm capable of searching for and identifying a particular meter module identifier and data packet identifier associated with a particular data packet stored in a queue or other data storage device. Suitable algorithms capable of searching for and identifying a particular meter module identifier and data packet identifier associated with a particular data packet stored in a queue or other data storage device can utilize some or all of the conditions and/or thresholds expressed below, such as conditions (1) and (2), or thresholds such as a normalized receive time difference threshold or a normalized energy usage difference threshold. Other algorithms in accordance with other embodiments of the invention can utilize any combination of conditions and/or thresholds.

In one embodiment, an algorithm for a filtering engine in accordance with the invention can determined a threshold. For example, a filtering engine can determine a threshold based at least in part on a sequence number, such as a sequence number difference threshold (SNDT). A sequence number difference threshold can be calculated by comparing at least two sequence numbers associated with respective data packets from the same endpoint module. An associated algorithm can compare the two sequence numbers, for example, perform a subtraction process to subtract the larger sequence number from the smaller sequence number, and compare the result against a predefined threshold. Based at least in part on the comparison of the result with the threshold, a determination whether to select or omit one of the data packets can be performed. The filtering engine can utilize a sequence number identifier associated with a particular data packet and compare the sequence number identifier to a threshold, such as a SNDT, wherein the SNDT can be based at least in part on one or more sequence number identifiers associated with one or more previously received or otherwise stored data packets in a queue. In this example, a threshold such as a SNDT can be selected or otherwise determined to reduce or otherwise eliminate redundant data packets from being stored in a particular queue. A threshold, such as a SNDT, can be selected or otherwise determined to anticipate receiving, and reducing or otherwise eliminating of redundant data packets in successively received data packets.

In another example, an embodiment of a filtering engine in accordance with the invention can determine a threshold based at least in part on a signal-related characteristic, such as RF link quality with a particular meter module. In this manner, the probabilistic nature of data packet reception can be utilized to determine a threshold based at least in part on a specific RF link quality for a particular meter module. In some instances, the probability of receiving redundant information or data packets from a particular meter module can be based at least in part on the RF link quality between the meter module to bridge. Thus, a threshold, such as a SNDT, can be determined when the sequence number for a received data packet is compared to a predecessor data packet previously stored in the queue.

In yet another example, an embodiment of a filtering engine in accordance with the invention can determine a threshold based at least in part on a signal-related characteristic, such as signal strength of a received data packet as measured by a RF signal strength indicator (RSSI). In this example, a relatively high signal strength for a particular data packet can indicate that there is a relatively good RF link quality between the corresponding meter module and respective bridge. Thus, the respective bridge may be likely to receive more data packets from the corresponding meter module, and likewise, the greater likelihood that more redundant data packets will exist. The threshold, such as a SNDT in this example, can therefore be set to reduce or eliminate redundant data packets with little or no loss of non-redundant or other information. A signal-related characteristic can include, but is not limited to, A RSSI, or a signal to noise (SNR) ratio.

In another example, an embodiment of a filtering engine in accordance with the invention can determine a threshold based at least in part on a meter module-related characteristic, such as a decaying average packet success rate (PSR) for each meter module. In one embodiment, the filtering engine can determine a threshold based on a decaying average packet success rate. A decaying average packet success rate can be determined by calculating a weighted combination of an existing decaying average packet success rate (PSR) and a packet success rate over a predefined period of time. For example, 75% of an existing decaying average packet success rate (PSR) can be added to 25% of a newly determined packet success rate over a relatively short period of time to determine a decaying average or decaying average packet success rate. The filtering engine can then generate and store a table capable of correlating meter modules and respective values for a decaying average packet success rate. A meter module-related characteristic can include, but is not limited to, A packet success rate, an average missing packet size, and a longest sequence of missing packets.

In yet another example, an embodiment of a filtering engine in accordance with the invention can determine a threshold based at least on a network-related characteristic. In this example, the filtering engine can detect and determine the network load on a particular network layer, bridge, or other device, and account for some or all dynamic transmission throttling associated with the particular network layer, bridge, takeout bridge, router, or other network-related device. The filtering engine can then determine a threshold, such as a SNDT, based on at least a network-related characteristic such as the network load on a subsequent network layer. In at least one embodiment, the threshold can be based on a packet success rate (PSR) for a particular meter module and further based on a network load on a particular network layer, bridge, or other device. In those instances when the threshold is based at least on a network-related characteristic, such as the network load on a subsequent network layer, when the network load increases, the threshold can also increase proportionally to throttle transmission of one or more data packets via the network. The same mechanism can facilitate the transmission of additional data packets via the network, even redundant data packets, when there is available bandwidth in a subsequent network layer. A network-related characteristic can include, but is not limited to, tickle success rate, data transfer success rate, link RF signal strength indicator (RSSI), local area network (LAN) utilization, link throughput, and link signal to noise ratio (SNR).

In yet another example, an embodiment of a filtering engine in accordance with the invention can determine a threshold based at least on a data packet-related characteristic. In this example, the filtering engine can determine a threshold based at least in part on a data-packet characteristic, such as a normalized receive time difference threshold (NRTDT). In at least one embodiment, data packets can be constructed based in part on at least an amount of energy used in every "x" second duration. The sequence of the data packets received at a bridge can be calculated by using the time at which each data packet is received. The time difference between two received packets can be used to determine how many data packets were sent from a respective meter module. Normalization can be performed by dividing the time difference by the time elapsed between two successive data packets generated at a particular meter module. In another embodiment, a filtering engine can determine a threshold based at least on a data-packet characteristic, such as a normalized energy usage difference threshold (NEUDT). In this example, a threshold such as a NEUDT can be determined using data packet information associated with the time duration for each "x" unit of energy used. A data packet-related characteristic can include, but is not limited to, time interval packets, revenue interval packets, and event packets.

In one embodiment, an embodiment of a filtering engine in accordance with the invention can utilize multiple log queues for each data packet type (interval, administrative, magnet, power-up, last-gasp, etc.) or for each subgroup (metering data packet groups, status data packet groups, diagnostics packet, etc.) group. In this embodiment, multiple log queues can permit different processing options to be applied to different or respective data packet types or data packet groups. In some instances, multiple log queues can permit modification of the order of data transmission between different or respective packet types for data packet groups from the same meter module.

In one embodiment, an embodiment of a filtering engine in accordance with the invention can utilize one or more particular conditions to be satisfied in order to achieve real time data traffic reduction using one or more data storage devices, such as multiple data packet queues. For example, a utility data collection system, such as 100 in FIG. 1, in accordance with an embodiment of the invention can satisfy at least condition (1) described below and achieve real time data traffic reduction.

$$(1) \quad Rlog < BW(2) / (Mbridge * BW(1))$$

In one condition (1) above, Rlog is less than BW(2) divided by the product of Mbridge times BW(1). Rlog is a quantitative measurement of data packet traffic reduction based on usage of a data storage device, such as queue 408 in FIG. 4. One example of a suitable data storage device is a log queue. BW(1) is a quantitative measurement of the bandwidth of a first device in a first network layer, such as 304 in FIG. 3. An example of a suitable first device is a receiver or bridge. BW(2) is a quantitative measurement of the bandwidth of a second device in a second network layer, such as 310 in FIG. 3. An example of a suitable second device is a takeout router or takeout bridge, such as 312 in FIG. 3. Mbridge is a quantitative measurement of the average number of bridges, that a single takeout point, such as takeout router 312 in FIG. 3, is serving.

$$(2) \quad Rlog = function (SNDT)$$

As shown in condition (2), Rlog can be a function of a sequence number difference threshold (SNDT) as defined previously. In the example shown, the sequence number difference threshold can be equal to a rounded integer portion of the product of the number of repetitions (N) in a selected data packet protocol, such as N = 9 shown in FIG. 1, and the packet success rate (PSR) measured in percentage for a particular meter module. The sequence number difference threshold is less than the number of repetition (N) in the selected data packet protocol, and can also be a function of a packet success rate (PSR) measured in percentage and associated with a particular meter module. Furthermore, in the example shown, Rlog is greater than 1 divided by N, and is less than 1 divided by the sequence number difference threshold. In at least one embodiment, the sequence number difference threshold can be a function of a quantitative measurement of signal strength associated with the particular meter module, such as RF signal strength indicator (RSSI). As described previously, the packet success rate and the RF signal strength indicator can each be a relative measurement of link quality between the particular meter module and the takeout router or takeout bridge.

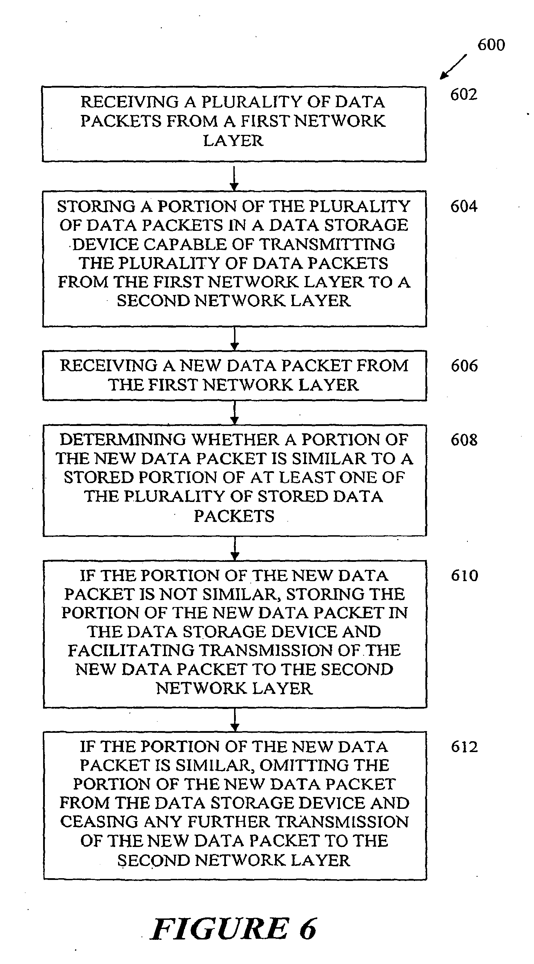

FIG. 6 illustrates an example of a method which can be implemented by an embodiment of a filtering engine in accordance with the invention. For example, the method 600 can be implemented by a filtering engine shown as 202 in FIG. 2. or 300 in FIG. 3. The method 600 can reduce data traffic in a data collection network which includes a first network layer and a second network layer, and wherein the data traffic include a plurality of data packets capable of being transmitted from the first network layer to the second network layer.

The method 600 begins in block 602. In block 602, a plurality of data packets can be received from a first network layer.

Block 602 is followed by block 604, in which a portion of the plurality of data packets can be stored in a data storage device capable of transmitting the plurality of data packets from the first network layer to a second network layer.

Block 604 is followed by block 606, in which a new data packet can be received from the first network layer.

Block 606 is followed by block 608, in which a determination is made whether a portion of the new data packet is similar to a stored portion of at least one of the plurality of stored data packets.

Block 608 is followed by block 610, in which if the portion of the new data packet is not similar to a stored portion of at least one of the plurality of data packets, storing the portion of the new data packet in the data storage device and facilitating transmission of the new data packet to the second network layer.

Block 610 is followed by block 612, in which if the portion of the new data packet is similar to a stored portion of at least one of the plurality of data packets, the portion of the new data packet is omitted from the data storage device and there is no transmission of the new data packet to the second network layer.

The method 600 ends in block 612.

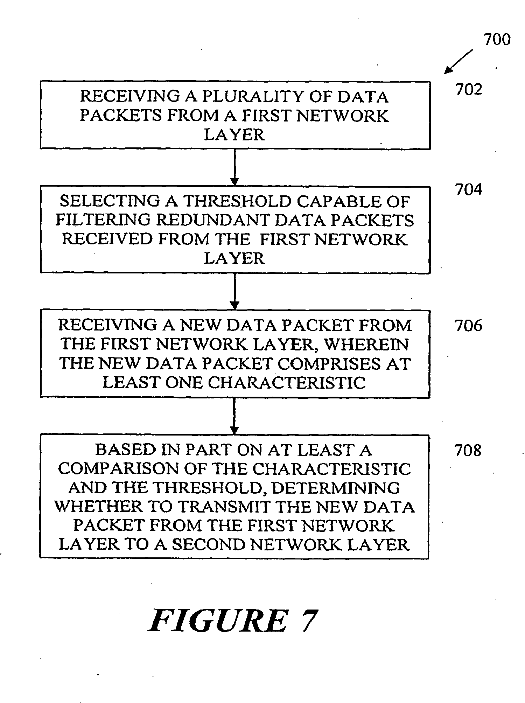

FIG. 7 illustrates an example of a method which can be implemented by an embodiment of a filtering engine in accordance with the invention. For example, the method 700 can be implemented by a filtering engine shown as 202 in FIG. 2 or 300 in FIG. 3. The method 700 can decrease data transfer traffic communicated in a data collection network, wherein the network comprises at least two network layers.

The method 700 begins in block 702. In block 702, a plurality of data packets is received from a first network layer.

Block 702 is followed by block 704, in which a threshold is selected capable of filtering redundant data packets received from the first network layer.

Block 704 is followed by block 706, in which a new data packet is received from the first network layer, wherein the new data packet comprises at least one characteristic.

Block 706 is followed by block 708, in which based in part on at least a comparison of the characteristic and the threshold, a determination is made whether to transmit the new data packet from the first network layer to a second network layer.

The method 700 ends in block 708.

The structures and processes described above illustrate exemplary embodiments of inventive concepts included in the present invention. Other systems and processes are possible. While the invention has been described in detail with particular references to these particular embodiments, variations and modifications can be affected within the spirit and scope of the invention as described in this document. For example, the techniques of the present invention may also be used with other types of data collection and processing systems. Nothing in this specification is meant to limit, expressly or implicitly, the plain meaning of the terms used in the following claims.

**Claims**

1. A method for decreasing data transfer traffic communicated in a data collection network (200), wherein the network comprises at least two network layers (304, 310), the method comprising:

   receiving (702) a plurality of data packets from a first network layer (304);
   selecting a threshold (704) capable of filtering redundant data packets received from the first network layer (304) based at least on a signal characteristic associated with at least one of the plurality of data packets;
   receiving a new data packet (706) from the first network layer (304), wherein the new data packet comprises at least one signal characteristic; and
   determining (708) whether to transmit the new data packet from the first network layer to a second network layer (310) by determining whether a signal characteristic associated with a new data packet meets or exceeds the threshold, wherein if the signal characteristic associated with the new data packet meets or exceeds the threshold, then determining that the new data packet is not similar to at least one of the plurality of data packets.

2. The method of claim 1, further comprising:

   if a decision is made to transmit the new data packet, storing a portion of the new data packet in a data storage device and facilitating transmission of the new data packet to the second network layer (310).

3. The method of claim 1, wherein the at least one characteristic of the new data packet is based at least on one identifier.

4. The method of claim 3, wherein the at least one identifier comprises at least one of: a meter module identifier, or a data packet identifier.

5. The method of claim 1, wherein the new data packet comprises at least one of: meter collection data, utility consumption data, data based in part on time, or data based in part on usage of a utility.

6. The method of claim 2, wherein the data storage device comprises at least one of: a queue, a plurality of queues, a log queue, a plurality of log queues, a first in first out FIFO queue, a plurality of first in first out FIFO queues, a memory, a plurality of memories, RAM, a meter, a meter module, a router, a bridge, or a takeout device.

7. The method of claim 2, wherein the data storage device comprises a plurality of queues, wherein a grouping of data packets can be stored in a respective queue capable of receiving the grouping of data packets.

8. The method of claim 7, wherein the grouping of data packets comprises at least one of: a data packet type, a data packet interval, a data packet sequential order from a particular meter module, a metering data packet group, or a status data packet group.

9. The method of claim 1, wherein determining whether to transmit the new data packet from the first network layer (304) to a second network layer (310) comprises:

   determining a threshold based at least in part on a sequence number associated with at least one of the plurality of data packets; and
   determining whether a sequence number associated with the new data packet meets or exceeds the threshold, wherein if the sequence number meets or exceeds the threshold, then determining that the new data packet is similar to at least one of the plurality of data packets.

10. The method of claim 9, wherein the threshold comprises a sequence number difference threshold SNDT.

11. The method of claim 1, wherein the signal characteristic associated with at least one of the plurality of data packets comprises at least one of: radio frequency RF link quality; signal strength; radio frequency RF signal strength indicator; or decaying average packet success rate.

12. The method of claim 9, wherein determining whether a newly received data packet is similar to at least one of the plurality of stored data packet to at least one of the plurality of data packets comprises:

   determining a threshold based at least in part on a characteristic associated with at least one meter module; and
   determining whether a characteristic associated with a particular meter module the new packet is associated with meets or exceeds the threshold, wherein if the threshold is not met or exceeded, then determining that the new data packet is similar to at least one of the plurality of data packets.

13. The method of claim 12, wherein the characteristic associated with at least one meter module comprises at least one of: a decaying average packet success rate for a particular meter module.

14. The method of claim 9, wherein determining whether a newly received data packet is similar to at least one of the plurality of stored data packet to at least one of the plurality of data packets comprises:

   determining a threshold based at least in part on a network-based characteristic; and
   determining whether a network-based characteristic associated with the new data packet meets or exceeds the threshold, wherein if the threshold is not met or exceeded, then determining that the new data packet is similar to at least one of the plurality of data packets.

15. The method of claim 14, wherein the network-based characteristic comprises at least one of the following: a network load associated with a network layer, a network load associated with a bridge, a network load associated with a takeout bridge, or a network load associated with a router.

16. The method of claim 9, wherein determining whether a newly received data packet is similar to at least one of the plurality of stored data packet to at least one of the plurality of data packets comprises:

   determining a threshold based at least in part on a data packet-related characteristic; and
   determining whether a data packet-related characteristic associated with the new data packet meets or exceeds the threshold, wherein if the threshold is not met or exceeded, then determining that the new data packet is similar to at least one of the plurality of data packets.

**17.** The method of claim 16, wherein the threshold comprises at least one of the following: a normalized receive time difference threshold NRTDT.

**18.** A data collection system (200) with at least two network layers, the system comprising:

a plurality of modules (202) capable of transmitting data from a first network layer (304);

a filtering engine capable of:

processing a plurality of data packets received from the first network layer (304);
applying a threshold capable of filtering redundant data packets received from the first network layer (304) based at least on a signal characteristic associated with at least one of the plurality of data packets;
processing a new data packet received from the first network layer (304), wherein the new data packet comprises at least one signal characteristic; and
determining whether to transmit the new data packet from the first network layer to a second network layer (310) by determining whether a signal characteristic associated with a new data packet meets or exceeds the threshold, wherein if the signal characteristic associated with the new data packet meets or exceeds the threshold, then determining that the new data packet is not similar to at least one of the plurality of data packet.

**19.** The system of claim 18, wherein the filtering engine is further capable of:

if a decision is made to transmit the new data packet, storing a portion of the new data packet in a data storage device and facilitating transmission of the new data packet to the second network layer.

**Patentansprüche**

**1.** Ein Verfahren zur Verminderung des Datentransferverkehrs, übermittelt in einem Netzwerk (200) zum Sammeln von Daten, wobei das Netzwerk aus wenigsten zwei Netzwerkschichten (304, 310) besteht, das Verfahren umfasst:

den Empfang (702) einer Vielzahl von Datenpaketen aus einer ersten Netzwerkschicht (304); auswählen eines Schwellenwertes (704), der geeignet ist, redundante Datenpaketen, die aus der ersten Netzwerkschicht (304) empfangen werden, zu filtern, basierend auf mindestens einer Signalcharakteristik, die mit wenigstens einen aus der Vielzahl von Datenpaketen assoziiert ist;
Empfangen eines neuen Datenpaketes (706) aus der ersten Netzwerkschicht (304), wobei das neue Datenpaket wenigstens eine Signalcharakteristik umfasst, und
Bestimmen (708), ob das neue Datenpaket aus der ersten Netwerkschicht zur zweiten Netzwerkschicht (310) übertragen werden soll, durch das Bestimmen, ob die Signalcharakteristik zu dem neuen Signalpaket passt oder den Schwellenwert übersteigt , wenn dies so ist, Bestimmen, dass das neue Datenpaket nicht gleichartig zu wenigstens einem aus der Vielzahl von Datenpaketen ist.

**2.** Das Verfahren nach Anspruch 1, des Weiteren umfassend:

sobald eine Entscheidung zur Übertragung des neuen Datenpaketes getroffen worden ist, Speichern eines Teils des neuen Datenpaketes in einer Einrichtung zur Datenspeicherung und das Übertragen der neuen Datenpakete zu der zweiten Netzwerkschicht (310) zu ermöglichen.

**3.** Das Verfahren nach Anspruch 1, wobei wenigstens eine Charakteristika des neuen Datenpakets alls Grundlage für wenigstens einen Identifizierer für Daten dient.

**4.** Das Verfahren nach Anspruch 3, wobei der eine Identifizierer für Daten wenigstens einen Meter Modul Identifizierer oder einen Identifizierer für Datenpakete umfasst.

**5.** Das Verfahren nach Anspruch 1, wobei das neue Datenpaket wenigsten umfasst: ein Zählwerk zur Erfassung der Daten, des Nutzwertes der Verbrauchsdaten, auf Daten basierenden Anteil der Zeit, oder auf Daten basierenden Anteil im Gebrauch eines Nutzens.

**6.** Das verfahren nach Anspruch 2, wobei die Vorrichtung zur Speicherung von Daten wenigstens eine Warteschlange, eine Vielzahl von Warteschlangen, einen Stamm von Warteschlangen, eine Vielzahl von Stämmen von Warteschlangen, eine First - In - Forst Out FIFO Warteschlange, eine Vielzahl von First - In - First - Out FIFO Warteschlangen, einen Speicher, eine Vielzahl von Speichern, einen RAM, ein Meter, ein Meter-Modul, einen Router, eine Bridge oder eine Entnahmeeinrichtung umfasst.

7. Das Verfahren nach Anspruch 2, wobei die Vorrichtung zur Speicherung eine Vielzahl von Warteschlangen umfasst, wobei eine Gruppierung der Datenpakete bezüglich Ihrer Warteschlangenfähigkeit der gruppiert empfangenen Datenpakete gespeichert werden kann.

8. Das Verfahren nach Anspruch 7, wobei die gruppierten Datenpakete wenigstens einen Daten-Paket-Typ, ein Daten-Paket-Intervall, ein subsequentielles Datenpaket , angefordert von einem einzelnen Zählwerksmodul, eine Dosierung der Datenpaket Gruppe oder eine Paketgruppe von Statusdaten umfasst.

9. Das Verfahren nach Anspruch 1, wobei bestimmt wird, ob das neue Datenpaket von der ersten Netzwerkschicht (304) zu der zweiten Netzwerkschicht (310) übertragen wird, umfassend:

   Bestimmen eines Schwellenwertes wenigstens teilweise basierend auf eine Sequenznummer die wenigstens mit einem aus der Vielzahl von Datenpaketen alsoziiert ist, und
   Bestimmen, ob eine neue Sequenznummer mit dem neuen Datenpaket assoziiert, den Schwellenwert einhält oder darüber hinausgeht, sodann Bestimmen, ob das neue Datenpaket gleichartig zu wenigstens einem aus der Vielzahl von Datenpaketen ist.

10. Das Verfahren nach Anspruch 9, wobei der Schwellenwert einen Sequenznummernunterschied-Schwellenwert SNDT umfasst.

11. Das Verwahren nach Anspruch 1, wobei die Signalcharakteristik mit wenigstens einem aus der Vielzahl von Datenpaketen assoziiert ist und wenigstens Radiofrequenz RF mit Verbindungsqualität; Signalstärke; Radiofrequenz RF Anzeigte der Signalstärke oder und einer Erfolgsaussicht für ein Durchschnittspaket mit veralteten Daten umfassen.

12. Das Verfahren nach Anspruch 9, wobei bestimmt wird, ob die neu empfangenen Datenpakete gleichartig zu wenigstens einem Datenpaket aus einer Vielzahl der gespeicherten Datenpakete und die wenigstens eines aus der Vielzahl der gespeicherten Datenpakete umfasst:

   Bestimmen eines Schwellenwertes, basierend auf wenigstens einem Teil der Charakteristika, die mit wenigstens einem Meter-Modul assoziiert sind, und
   Bestimmen, ob eine Charakteristika insbesondere mit einem bestimmten Meter-Modul assoziiert ist; das neue Paket ist, sodann mit den übereinstimmenden oder überschreitenden Schwellenwerten zu assoziieren, sobald der Schwellenwert nicht übereinstimmt, sondern überschritten wird, Bestimmen eines neuen Datenpakets, welches gleichartig zu wenigstens einem aus der Vielzahl von Datenpakten ist.

13. Das Verfahren nach Anspruch 12, wobei die Charakteristik mit wenigstens einem Meter-Modul assoziiert ist und wenigstens ein abklingendes Durchschnittspaket einer Erfolgsrate für ein bestimmtes Meter-Modul umfasst.

14. Das Verfahren nach Anspruch 9, wobei bestimmt wird, ob ein neu empfangenes Datenpaket gleichartig zu einem aus einer Vielzahl von gespeicherten Datenpaketen ist, und wenigstens eines aus der Vielzahl von Datenpaketen umfassend:

   Bestimmen eines schwellenwertes, basierend auf wenigstens einem Teil der Netzwerk basierten Charakteristik, und
   Bestimmen ob ein Netzwerk basiert Charakteristik assoziiert ist mit neuen Datenpaketen, die den Schwellenwert einhalten oder überschreiten, wobei wenn der Schwellenwert eingehalten order überschritten wird, sodann Bestimmen, ob das neue Datenpaket gleichartig zu wenigsten einem aus der Vielzahl von Datenpaketen ist.

15. Das Verfahren nach Anspruch 9, wobei die netzwerkbasierte Charakteristik umfasst wenigstens eines der folgenden: eine Netzwerklast, die mit einer Netzwerkschicht assoziiert ist, eine Netzwerklast die mit einer Überführung assoziiert ist, eine Netzwerklast, die mit einer Ausgangsüberführung assoziiert ist oder eine Netzwerklast, die mit einem Router assoziiert ist.

**EP 1 987 639 B1**

**16.** Das Verfahren nach Anspruch 9, wobei bestimmt wird, ob das neu empfangene Datenpaket gleichartig zu wenigstens einem aus der Vielzahl von gespeicherten Datenpaketen ist, wobei wenigstens eines aus der Vielzahl von Datenpakete umfasst:

Bestimmen eines Schwellenwertes, basierend auf wenigstens einem Teil der artverwandten Charakteristik der Datenpakete, und
Bestimmen, ob eine artverwandte Charakteristik der Datenpakete mit einem neuen Datenpaket assoziiert ist und den Schwellenwert einhält oder diesen überschreitet , wenn der Schwellenwert nicht stimmt oder überschritten wird, sodann Bestimmen, ob das neue Datenpaket wenigstens gleichartig zu einem aus einer Vielzahl von Datenpakete ist.

**17.** Das Verfahren nach Anspruch 16, wobei der Schwellenwert wenigstens eines der folgenden umfasst: einen Schwellenwert, aufbauend auf einen normalisierten Unterschied in der Empfangzeit NRTDT.

**18.** Ein Datensammelsystem (200), bestehend aus wenigstens zwei Netzwerkschichten, das System umfasst:

eine Vielzahl von Modulen (202), die geeignet sind, Daten aus einer ersten Netzwerkschicht (304) zu übertragen,

eine Filtermaschine, die in der Lage ist:

Verarbeiten einer Vielzahl von Datenpaketen, die von der ersten Netzwerkschicht (304) empfangen werden,
Anwenden eines Schwellenwertes der in der Lage ist, redundante Datenpakete, die von der ersten Netzwerkschicht (304) empfangen worden, basierend auf wenigstens eine Signalcharakteristik, herauszufiltern,
Verarbeiten der neuen Datenpakete, die von der ersten Netzwerkschicht (304) empfangen worden, wobei das neue Datenpaket wenigstens eine Signalcharakteristik umfasst, und
Bestimmen, ob das neue Datenpaket von der ersten Netzwerkschicht zu der zweiten Netzwerkschicht (310) durch das Bestimmen, ob eine Signalcharakteristik assoziiert ist mit einen neuen Datenpaket, das den Schwellenwert einhält oder überschreitet, zu übertragen ist , wobei, wenn die Signalcharakteristik mit den neuen Datenpaket den Schwellenwert einhält oder überschreitet, dann Bestimmen, dass das neue Datenpaket nicht gleichartig mit wenigstens einem aus einer Vielzahl von Datenpaketen ist.

**19.** Das System nach Anspruch 18, wobei die Filtermaschine des Weiteren in der Lage ist:

wenn eine Entscheidung zur Übertragung eines neuen Datenpaketes getroffen worden ist, Speichern eines Teils des neuen Datenpaketes in einer Einrichtung zur Datenspeicherung und das Ermöglichten der Übertragung des neuen Datenpaketes zu der zweiten Netzwerkschicht.

**Revendications**

**1.** Procédé destiné à réduire un trafic de transfert de données transmis dans un réseau de collecte de données (200), dans lequel le réseau comprend au moins deux couches de réseau (304, 310), le procédé comprenant les étapes consistant à :

recevoir (702) une pluralité de paquets de données en provenance d'une première couche de réseau (304) ;
sélectionner un seuil (704) capable de filtrer des paquets de données redondants reçus en provenance de la première couche de réseau (304) sur la base d'au moins une caractéristique de signal associée à l'un au moins de la pluralité de paquets de données ;
recevoir un nouveau paquet de données (706) en provenance de la première couche de réseau (304), dans lequel le nouveau paquet de données comprend au moins une caractéristique de signal ; et
déterminer (708) s'il convient de transmettre le nouveau paquet de données en provenance de la première couche de réseau vers une deuxième couche de réseau (310) en déterminant si une caractéristique de signal associée à un nouveau paquet de données satisfait ou dépasse le seuil, dans lequel si la caractéristique de signal associée au nouveau paquet de données satisfait ou dépasse le seuil, déterminer alors que le nouveau paquet de données n'est pas similaire à l'un au moins de la pluralité de paquets de données.

**2.** Procédé selon la revendication 1, comprenant en outre l'étape consistant à :

si une décision est prise, transmettre le nouveau paquet de données, stocker une partie du nouveau paquet de données dans un dispositif de stockage de données et faciliter la transmission du nouveau paquet de données vers la deuxième couche de réseau (310).

**3.** Procédé selon la revendication 1, dans lequel l'au moins une caractéristique du nouveau paquet de données est basée au moins sur un identifiant.

**4.** Procédé selon la revendication 3, dans lequel l'au moins un identifiant comprend au moins l'un d'un identifiant de module de mesure ou d'un identifiant de paquet de données.

**5.** Procédé selon la revendication 1, dans lequel le nouveau paquet de données comprend des données de collecte de mesure et / ou des données de consommation de service et / ou des données basées en partie sur le temps et / ou des données basées en partie sur l'utilisation d'un service.

**6.** Procédé selon la revendication 2, dans lequel le dispositif de stockage de données comprend une file d'attente et / ou une pluralité de files d'attente et / ou une file d'attente de journal et / ou une pluralité de files d'attente de journaux et /ou une file d'attente premier entré premier sorti FIFO et / ou une pluralité de files d'attente premier entré premier sorti FIFO et / ou une mémoire et / ou une pluralité de mémoires et / ou une RAM et / ou un dispositif de mesure et / ou un module de mesure et / ou un routeur et / ou un pont et / ou un dispositif à prendre.

**7.** Procédé selon la revendication 2, dans lequel le dispositif de stockage de données comprend une pluralité de files d'attente, dans lequel un groupement de paquets de données peut être stocké dans une file d'attente respective capable de recevoir le groupement de paquets de données.

**8.** Procédé selon la revendication 7, dans lequel le groupement de paquets de données comprend un type de paquet de données et / ou un intervalle de paquet de données et / ou un ordre séquentiel de paquet de données en provenance d'un module de mesure particulier et / ou un groupe de paquets de données de mesure et / ou un groupe de paquets de données d'état.

**9.** Procédé selon la revendication 1, dans lequel l'étape consistant à déterminer s'il convient de transmettre le nouveau paquet de données en provenance de la première couche de réseau (304) vers une deuxième couche de réseau (310) comprend les étapes consistant à :

déterminer un seuil basé au moins en partie sur un numéro de séquence associé à l'un au moins de la pluralité de paquets de données ; et
déterminer si un numéro de séquence associé au nouveau paquet de données satisfait ou dépasse le seuil, dans lequel si le numéro de séquence satisfait ou dépasse le seuil, déterminer alors que le nouveau paquet de données est similaire à l'un au moins de la pluralité de paquets de données.

**10.** Procédé selon la revendication 9, dans lequel le seuil comprend un seuil de différence de numéro de séquence SNDT.

**11.** Procédé selon la revendication 1, dans lequel la caractéristique de signal associé à l'un au moins de la pluralité de paquets de données comprend une qualité de liaison radioélectrique HF et / ou une intensité de signal et / ou un indicateur d'intensité de signal radioélectrique HF et / ou un taux de succès de paquet moyen décroissant.

**12.** Procédé selon la revendication 9, dans lequel l'étape consistant à déterminer si un paquet de données récemment reçu est similaire à l'un au moins de la pluralité de paquet de données stockés à l'un au moins de la pluralité de paquets de données comprend les étapes consistant à :

déterminer un seuil basé au moins en partie sur une caractéristique associée au moins à un module de mesure ; et
déterminer si une caractéristique associée à un module de mesure particulier auquel le nouveau paquet est associé, satisfait ou dépasse le seuil, dans lequel si le seuil n'est pas satisfait ou dépassé, déterminer alors que le nouveau paquet de données est similaire à l'un au moins de la pluralité de paquets de données.

**13.** Procédé selon la revendication 12, dans lequel la caractéristique associée à un module de mesure au moins comprend au moins un taux de succès de paquet moyen décroissant pour un module de mesure particulier.

**14.** Procédé selon la revendication 9, dans lequel l'étape consistant à déterminer si un paquet de données récemment reçu est similaire à l'un au moins de la pluralité de paquet de données stockés à l'un au moins de la pluralité de paquets de données comprend les étapes consistant à :

déterminer un seuil basé au moins en partie sur une caractéristique basée sur un réseau ; et
déterminer si une caractéristique basée sur un réseau associée au nouveau paquet de données satisfait ou dépasse le seuil, dans lequel si le seuil n'est pas satisfait ou dépassé, déterminer alors que le nouveau paquet de données est similaire à l'un au moins de la pluralité de paquets de données.

15. Procédé selon la revendication 14, dans lequel la caractéristique basée sur un réseau comprend une charge de réseau associée à une couche de réseau et / ou une charge de réseau associée à un pont et / ou une charge de réseau associée à un pont à prendre et / ou une charge de réseau associée à un routeur.

16. Procédé selon la revendication 9, dans lequel l'étape consistant à déterminer si un paquet de données récemment reçu est similaire à l'un au moins de la pluralité de paquet de données stockés à l'un au moins de la pluralité de paquets de données comprend les étapes consistant à :

déterminer un seuil basé au moins en partie sur une caractéristique qui se rapporte à un paquet de données ; et
déterminer si une caractéristique qui se rapporte à un paquet de données associée au nouveau paquet de données, satisfait ou dépasse le seuil, dans lequel si le seuil n'est pas satisfait ou dépassé, déterminer alors que le nouveau paquet de données est similaire à l'un au moins de la pluralité de paquets de données.

17. Procédé selon la revendication 16, dans lequel le seuil comprend au moins un seuil de différence de temps de réception normalisé RTDT.

18. Système de collecte de données (200) présentant au moins deux couches de réseau, le système comprenant :

une pluralité de modules (202) capables de transmettre des données à partir d'une première couche de réseau (304) ;

un moteur de filtrage capable de :

traiter une pluralité de paquets de données reçus en provenance de la première couche de réseau (304) ;
appliquer un seuil capable de filtrer des paquets de données redondants reçus en provenance de la première couche de réseau (304) sur la base d'une caractéristique de signal au moins associée à l'un au moins de la pluralité de paquets de données ;
traiter un nouveau paquet de données reçu en provenance de la première couche de réseau (304), dans lequel le nouveau paquet de données comprend au moins une caractéristique de signal ; et
déterminer s'il convient de transmettre le nouveau paquet de données en provenance de la première couche de réseau à une deuxième couche de réseau (310) en déterminant si une caractéristique de signal associée à un nouveau paquet de données satisfait ou dépasse le seuil, dans lequel si la caractéristique de signal associée au nouveau paquet de données satisfait ou dépasse le seuil, déterminer alors que le nouveau paquet de données n'est pas similaire à l'un au moins de la pluralité de paquets de données.

19. Système selon la revendication 18, dans lequel le moteur de filtrage est en outre capable de :

si une décision est prise, transmettre le nouveau paquet de données, stocker une partie du nouveau paquet de données dans un dispositif de stockage de données et faciliter la transmission du nouveau paquet de données vers la deuxième couche de réseau.

One
packet

data packet sequence number (x+0)

data packet sequence number (x+1)

data packet sequence number (x+2)

data packet
sequence number (x+N)

100

102

104

106

108

110

112

## FIGURE 1

**FIGURE 2**

306

304

310

302

meter
module

308

meter
module

Bridge

312

FILTERING
ENGINE

Takeout
Router
Or
Bridge

300

meter
module

Lower data link quality

Higher data link quality

(lower SNR, or PSR)

Bridge

(higher SNR, or PSR)

FILTERING
ENGINE

Higher overall bandwidth

Lower overall bandwidth

meter
module

Bridge

FILTERING
ENGINE

308n

meter
module

300

306n

## FIGURE 3

FILTERING ENGINE  400

PROCESSOR 402

RAM  404

FILTERING
APPLICATION
PROGRAM  406

QUEUE          408

# FIGURE 4

504n  502a  512  500  508

Step 1. A packet from
id 70077 is received

| MM id: 12225, PT:Interval, Seq. No:1 |
| MM id: 10004, PT:Interval, Seq. No:7 |
| MM id: 45451, PT:Admin, Seq. No:2 |
| .. |
| .. |
| MM id: 20201, PT:Interval, Seq. No:3 |
| MM id: 45451, PT:Interval, Seq. No:12 |
| MM id: 83333, PT:Interval, Seq. No:0 |

Step 2. ID 70077 is
searched in the log
queue

Step 3. No match or
Seq No difference is
larger than a threshold
then, shift all packets
up one slot, discard the
oldest packet (12225)
from the queue.

Step 4. Packet 70077 is
forwarded and logged
into queue as the
newest item

504a  BEFORE

| MM id: 70077, PT:Interval, Seq. No:4 |

510  506  502n  504a

**FIGURE 5A**

502a  500  508

| MM id: 10004, PT:Interval, Seq. No:7 |   ← 504n
| MM id: 45451, PT:Admin, Seq. No:2 |
| .. |
| .. |
| MM id: 20201, PT:Interval, Seq. No:3 |
| MM id: 45451, PT:Interval, Seq. No:12 |
| MM id: 83333, PT:Interval, Seq. No:0 |
| MM id: 70077, PT:Interval, Seq. No:4 |

AFTER  502n

MM id: meter module identifier,
PT: Packet Type,
Seq No: packet sequence number

510  506

**FIGURE 5B**

600

602

```
┌─────────────────────────────────┐
│   RECEIVING A PLURALITY OF DATA  │
│   PACKETS FROM A FIRST NETWORK   │
│             LAYER                │
└─────────────────────────────────┘
```

604

```
┌─────────────────────────────────┐
│  STORING A PORTION OF THE PLURALITY │
│  OF DATA PACKETS IN A DATA STORAGE  │
│  DEVICE CAPABLE OF TRANSMITTING  │
│   THE PLURALITY OF DATA PACKETS  │
│  FROM THE FIRST NETWORK LAYER TO A │
│      SECOND NETWORK LAYER        │
└─────────────────────────────────┘
```

606

```
┌─────────────────────────────────┐
│  RECEIVING A NEW DATA PACKET FROM │
│      THE FIRST NETWORK LAYER     │
└─────────────────────────────────┘
```

608

```
┌─────────────────────────────────┐
│  DETERMINING WHETHER A PORTION OF │
│  THE NEW DATA PACKET IS SIMILAR TO A │
│  STORED PORTION OF AT LEAST ONE OF │
│   THE PLURALITY OF STORED DATA   │
│             PACKETS              │
└─────────────────────────────────┘
```

610

```
┌─────────────────────────────────┐
│    IF THE PORTION OF THE NEW DATA │
│  PACKET IS NOT SIMILAR, STORING THE │
│  PORTION OF THE NEW DATA PACKET IN │
│   THE DATA STORAGE DEVICE AND    │
│  FACILITATING TRANSMISSION OF THE │
│    NEW DATA PACKET TO THE SECOND │
│         NETWORK LAYER            │
└─────────────────────────────────┘
```

612

```
┌─────────────────────────────────┐
│    IF THE PORTION OF THE NEW DATA │
│  PACKET IS SIMILAR, OMITTING THE  │
│  PORTION OF THE NEW DATA PACKET   │
│  FROM THE DATA STORAGE DEVICE AND │
│  CEASING ANY FURTHER TRANSMISSION │
│   OF THE NEW DATA PACKET TO THE   │
│       SECOND NETWORK LAYER       │
└─────────────────────────────────┘
```

# FIGURE 6

700

702

| RECEIVING A PLURALITY OF DATA PACKETS FROM A FIRST NETWORK LAYER |
|---|

704

| SELECTING A THRESHOLD CAPABLE OF FILTERING REDUNDANT DATA PACKETS RECEIVED FROM THE FIRST NETWORK LAYER |
|---|

706

| RECEIVING A NEW DATA PACKET FROM THE FIRST NETWORK LAYER, WHEREIN THE NEW DATA PACKET COMPRISES AT LEAST ONE CHARACTERISTIC |
|---|

708

| BASED IN PART ON AT LEAST A COMPARISON OF THE CHARACTERISTIC AND THE THRESHOLD, DETERMINING WHETHER TO TRANSMIT THE NEW DATA PACKET FROM THE FIRST NETWORK LAYER TO A SECOND NETWORK LAYER |
|---|

## FIGURE 7

**EP 1 987 639 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1039688 A2
- US 6628699 B
- US 6617978 B
- US 6424270 B
- US 6195018 B
- US 4707839 A
- US 4730340 A
- US 6628699 A